(19) Europäisches Patentamt
European Patent Office
Office européen des brevets

(11) **EP 4 410 547 A1**

(12) **EUROPEAN PATENT APPLICATION**
published in accordance with Art. 153(4) EPC

(43) Date of publication:
**07.08.2024 Bulletin 2024/32**

(21) Application number: **22875970.0**

(22) Date of filing: **21.09.2022**

(51) International Patent Classification (IPC):
**B32B 27/32** (2006.01)    **B32B 9/00** (2006.01)
**B65D 65/40** (2006.01)

(52) Cooperative Patent Classification (CPC):
**B32B 9/00; B32B 27/32; B65D 65/40; Y02W 30/80**

(86) International application number:
**PCT/JP2022/035139**

(87) International publication number:
**WO 2023/054103 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.09.2021 JP 2021161269**

(71) Applicant: **Toyobo Co., Ltd.**
**Kita-ku**
**Osaka-shi, Osaka 530-0001 (JP)**

(72) Inventors:
• **IWATA, Daisuke**
**Inuyama-shi, Aichi 484-8508 (JP)**
• **YAMAZAKI, Atsushi**
**Inuyama-shi, Aichi 484-8508 (JP)**
• **KASHIWA, Mitsuhiro**
**Inuyama-shi, Aichi 484-8508 (JP)**
• **NAKANO, Mahiro**
**Inuyama-shi, Aichi 484-8508 (JP)**
• **YAMAGUCHI, Yuya**
**Osaka-shi, Osaka 530-0001 (JP)**

(74) Representative: **Vossius & Partner**
**Patentanwälte Rechtsanwälte mbB**
**Siebertstrasse 3**
**81675 München (DE)**

(54) **LAMINATED FILM AND PACKAGING MATERIAL**

(57)    The objective is to provide a laminated film that is a film based on a polypropylene film, capable of forming a laminate structure configured by almost a single kind of resin that imposes little load on the environment, the laminated film having performances necessary for packaging materials such as gas barrier properties, adhesiveness, and processing suitability. Provided is a laminated film having a base layer (A) mainly composed of polypropylene-based resin, a surface layer (B) on one surface of the base layer (A), and a surface layer (C) on the other surface, and an inorganic thin film layer further laminated on the surface layer (B) and an organic resin layer (E) in this order, and satisfying the following (a) to (d): (a) a deposition amount of the organic resin layer (E) is 0.10 $g/m^2$ or larger and 0.50 $g/m^2$ or smaller; (b) a Martens hardness when a surface on the organic resin layer side of the laminated film is measured with a test force of 0.1 mN is 248 $N/mm^2$ or less; (c) a haze of the laminated film is 6% or less; and (d) an oxygen permeability of the laminated film in an environment of 23°C and 65% RH is 10 mL/ $m^2 \cdot d \cdot MPa$ or less.

EP 4 410 547 A1

**Description**

TECHNICAL FIELD

The present invention relates to a gas barrier laminated film. More specifically, the present invention relates to a gas barrier coated film that imposes little load on the environment during production and disposal, and has both excellent gas barrier performance and adhesive strength adequate for a packaging material.

BACKGROUND ART

In recent years, regulations aimed at reducing the use of throwaway plastics have been tightened in Europe and other countries of the world. Behind this are the growing international awareness of resource recycling and the worsening waste problems in emerging countries. Therefore, environment-responsive products are required from the viewpoints of 3R (recycle, reuse, reduce) for plastic packaging materials demanded for foods, pharmaceuticals, and so on.

Examples of performances required for the environmentally friendly packaging materials described above include: (1) being made of recyclable materials, (2) having gas barrier performance that can block out various gases and extend the expiration date, and (3) having a laminate structure that imposes little load on the environment (for example, no organic solvent is used; use amounts of materials themselves are small; and recycling by monomaterialization is possible).

In recent years, use of polypropylene films has attracted attentions to enable the aforementioned (2) and (3). Polypropylene films are used for a wide range of applications, including packaging of food and other various products, electrical insulation, surface protecting films, and so on. Polypropylene films can exhibit high water vapor barrier properties due to their molecular structures. Furthermore, since a polypropylene-based or polyethylene-based heat-sealing resin is commonly used as a sealant to be attached to a surface base film, it is possible to achieve monomaterialization of a packaging material as a whole while keeping gas barrier properties by using a polypropylene film for the surface base and an unstretched polypropylene sheet for the sealant. This enables design of environmentally friendly, for example, easily recyclable packaging materials.

However, regarding the gas barrier properties mentioned in (2) above, although polypropylene films have water vapor barrier properties, the value indicating water vapor barrier properties is not sufficient compared to, for example, transparent inorganic vapor-deposited polyester films, which are generally considered to have excellent water vapor barrier properties, and there is also a problem that polypropylene films have very poor oxygen barrier properties. In order to address these problems, films in which a polymeric resin composition that is generally said to have relatively high oxygen barrier properties, such as polyvinyl alcohol, ethylene vinyl alcohol copolymer, polyvinylidene chloride resin, or polyacrylonitrile is laminated have been used (see, for example, Patent Literatures 1 to 3).

However, since the aforementioned gas barrier coated films produced by using a polymeric resin composition such as polyvinyl alcohol or ethylene vinyl alcohol copolymer have high humidity dependence, deterioration in gas barrier properties is observed under high humidity conditions. Although polyvinylidene chloride resin and polyacrylonitrile have low humidity dependence, there are problems that the barrier value as an absolute value is insufficient and the risk of generating harmful substances during disposal and incineration is high.

As a method for ameliorating the humidity dependence of a vinyl alcohol-based resin, a gas barrier coated film laminated with a coating layer of a mixture of a vinyl alcohol-based resin and a silane crosslinking agent has been proposed. In this case, since the vinyl alcohol-based resin is crosslinked by silanol groups, the humidity dependence is low and excellent gas barrier properties are exhibited (see, for example, Patent Literatures 4 and 5).

However, these gas barrier coated films require a heat treatment adequate for crosslinking, and when the base material is a polypropylene film, properties enough for a packaging material cannot be satisfied due to deterioration in mechanical properties and heat wrinkles during processing. In addition, a large amount of thermal energy is required at the time of a heat treatment during processing, which is not desirable from the viewpoint of environmental load. Furthermore, the water vapor barrier performance is still insufficient.

Meanwhile, as a measure for further improving the barrier performance, a gas barrier coated film laminated with a resin layer containing inorganic layered particles having a specific particle size and aspect ratio in a vinyl alcohol-based resin has been proposed. In this case, the inorganic layered particles dispersed and present in the resin layer create a bypass effect for gas molecules and excellent gas barrier properties are exhibited (see, for example, Patent Literatures 6 and 7).

However, in these gas barrier coated films, it is often the case that the inorganic layered particles are not uniformly dispersed in the coating film, and as a result, adhesiveness with the base film may be impaired and the lamination strength may decrease. In addition, sufficiently satisfactory performance is not obtained in terms of improving both oxygen barrier properties and water vapor barrier properties.

Any barrier coating layers described above need to be laminated with a film thickness of at least 0.5 $\mu$m or

more in order to exhibit sufficient barrier performance. A thick coating layer may make recycling difficult, and is not appropriate from the viewpoint of monomaterialization by a single material. Furthermore, in processing steps such as printing, there is also a problem of printing defects due to coating unevenness and irregularities.

CITATION LIST

PATENT LITERATURE

[PTL 1] Japanese Laid-Open Patent Publication No. 2000-52501
[PTL 2] Japanese Laid-Open Patent Publication No. H4-359033
[PTL 3] Japanese Laid-Open Patent Publication No. 2003-231221
[PTL 4] Japanese Laid-Open Patent Publication No. H4-345841
[PTL 5] Japanese Laid-Open Patent Publication No. 2006-95782
[PTL 6] Japanese Laid-Open Patent Publication No. 9-111017
[PTL 7] Japanese Laid-Open Patent Publication No. 2005-35167

DISCLOSURE OF THE INVENTION

PROBLEMS TO BE SOLVED BY THE INVENTION

In Patent Literatures 1 to 3, the barrier performance is insufficient, and additionally, environmentally compatible design is not considered. Patent Literatures 4 and 5 lack consideration about appropriately coating a polypropylene film, and also lack sufficient discussion about water vapor barrier properties. Patent Literature 6 lacks consideration about improvement in adhesiveness and water vapor barrier properties. Patent Literature 7 lacks consideration about oxygen barrier properties. None of these literatures improve the processability and consider environments by thinning the coating layer, and consider environments by thinning the adhesive layer in forming a laminate structure.

The materials that satisfy all of the following three points required for environmentally friendly packaging materials have not existed hitherto: (1) being made of recyclable materials, (2) having gas barrier performance that can block out various gases and extend the expiration date, and (3) having a laminate structure that facilitates recycling and imposes little load on the environment (monomaterialization).

The present invention has been made in light of the problems of the conventional art described above.

That is, an object of the present invention is to provide a laminated film that is a film based on a polypropylene film, capable of forming a laminate structure configured by almost a single kind of resin that imposes little load on the environment, the laminated film having performances necessary for packaging materials such as gas barrier properties, adhesiveness, transparency, and processing suitability.

SOLUTION TO THE PROBLEMS

The present inventors have found that by laminating a predetermined inorganic thin film layer and a coating layer adapted to the required performance on a polypropylene film, it is possible to greatly improve the gas barrier performance, and it is possible to provide a high-quality film that imposes little load on the environment and has improved adhesive strength, and finally have accomplished the present invention.

The present invention is as follows.

1. A laminated film having a base layer (A) mainly composed of a polypropylene-based resin, a surface layer (B) on one surface of the base layer (A), and a surface layer (C) on the other surface of the base layer (A), the laminated film having an inorganic thin film layer (D) further laminated on the surface layer (B), and an organic resin layer (E) further laminated on the inorganic thin film layer (D), the laminated film satisfying the following requirements:

(a) a deposition amount of the organic resin layer (E) is 0.10 $g/m^2$ or larger and 0.50 $g/m^2$ or smaller;
(b) a Martens hardness when a surface on the organic resin layer side of the laminated film is measured with a test force of 0.1 mN is 248 $N/mm^2$ or less;
(c) a haze of the laminated film is 6% or less; and
(d) an oxygen permeability of the laminated film in an environment of 23°C and 65% RH is 10 mL/ $m^2 \cdot d \cdot MPa$ or less.

2. The laminated film according to 1, wherein a water vapor permeability in an environment of 40°C and 90% RH is 1 g/m$^2$·d or less.

3. The laminated film according to 1 or 2, wherein an oxygen permeability of the laminated film in an environment of 23°C and 80% RH is 15 mL/ m$^2$·d·MPa or less.

4. The laminated film according to any one of 1 to 3, wherein an arithmetic mean roughness in a 2 μm square of the organic resin layer on the laminated film is within a range of 2.0 to 8.0 nm.

5. The laminated film according to any one of 1 to 4, wherein the laminated film has a thickness of 9 μm to 200 μm.

6. A packaging material comprising an olefin-based sealant layer and the laminated film according to any one of 1 to 5, wherein the olefin-based sealant layer is laminated on one side of the laminated film.

ADVANTAGEOUS EFFECTS OF THE INVENTION

By such techniques, the present inventors have made it possible to provide a laminated film having necessary performances such as barrier properties, adhesiveness, and processability required for packaging materials while taking environments into consideration. In particular, it is possible to improve the adhesive strength of a laminate finished product, and exhibit sufficient adhesive strength even if the thickness of the adhesive layer is reduced, so that consumption of the adhesive to be used is also reduced, leading to further reduction in environmental load.

DESCRIPTION OF EMBODIMENTS

Hereinafter, the present invention will be described in detail.

[Base film layer]

The propylene resin stretched film used as the base film in the present invention is preferably a biaxially stretched film. As the biaxially stretched polypropylene-based resin film, a known biaxially stretched polypropylene-based resin film can be used, and the raw materials, mixing ratio, and the like thereof are not particularly limited. The biaxially stretched polypropylene resin film may be made of, for example, a polypropylene homopolymer (propylene homopolymer), or may be made of a random copolymer or a block copolymer of propylene as a main component with one kind or two or more kinds selected from α-olefins such as ethylene, butene, pentene, and hexene, or may be made of a mixture of two or more of these polymers. For the purpose of modifying physical properties, known additives such as an antioxidant, an antistatic agent, and a plasticizer may be added, and for example, petroleum resin or terpene resin may be added.

Further, the biaxially stretched polypropylene-based resin film used in the present invention may be a single layer film, or may be a laminated film in which a plurality of resin films including a biaxially stretched polypropylene-based resin film are laminated. In the case of a laminated film, the type of a laminate, the number of laminated layers, the method of lamination, etc., are not particularly limited, and can be arbitrarily selected from known methods in accordance with the purpose.

In the present invention, the polypropylene resin that forms the base film is preferably a propylene homopolymer substantially not containing a comonomer, and even when a comonomer is contained, the amount of the comonomer is preferably 0.5 mol% or less. The upper limit of the amount of the comonomer is more preferably 0.3 mol%, and further preferably 0.1 mol%. Within the above range, crystallinity is improved, heat shrinkage rate at high temperatures is reduced, and heat resistance is improved. It should be noted that a comonomer may be contained in a trace amount as long as the crystallinity is not significantly deteriorated.

It is preferred that the polypropylene resin that forms the base film contains a propylene homopolymer obtained only from propylene monomers, and it is most preferred that a heterogeneous bond such as a head-to-head bond is not included even in the case of a propylene homopolymer.

From a practical aspect, the lower limit of the xylene soluble content of the polypropylene resin that forms the base film is preferably 0.1 % by mass. The upper limit of the xylene soluble content is preferably 7% by mass, more preferably 6% by mass, and further preferably 5% by mass. Within the above range, crystallinity is improved, heat shrinkage rate at high temperatures is further reduced, and heat resistance is improved.

In the present invention, the lower limit of the melt flow rate (MFR) (230°C, 2.16 kgf) of the polypropylene resin is preferably 0.5 g/10 minutes. The lower limit of the MFR is more preferably 1.0 g/10 minutes, further preferably 2.0 g/10 minutes, particularly preferably 4.0 g/10 minutes, and most preferably 6.0 g/10 minutes. Within the above range, the mechanical load is small and extrusion and stretching become easier. The upper limit of the MFR is preferably 20 g/10 minutes. The upper limit of the MFR is more preferably 17 g/10 minutes, further preferably 16 g/10 minutes, and particularly preferably 15 g/10 minutes. Within the above range, stretching becomes easier, thickness unevenness becomes smaller, stretching temperature and heat setting temperature are more likely to be raised, the heat shrinkage rate becomes smaller, and heat resistance improves.

From the viewpoint of heat resistance, the base film may be a uniaxially stretched film in the longitudinal direction (MD direction) or in the transverse direction (TD direction), but is preferably a biaxially stretched film. In the present invention, by stretching at least uniaxially, it is possible to obtain a film that has a high degree of heat resistance and has a low heat shrinkage rate at high temperatures that could not be expected with conventional polypropylene films. Examples of the stretching method include a simultaneous biaxial stretching method and a sequential biaxial stretching method, but the sequential biaxial stretching method is preferred from the viewpoint of improving flatness, dimensional stability, thickness unevenness, etc.

Regarding the sequential biaxial stretching method, the polypropylene resin is heated and melted using a single-screw or twin-screw extruder at a resin temperature of 200°C or higher and 280°C or lower, formed into a sheet through a T-die, and then extruded onto a chill roll at a temperature of 10°C or higher and 100°C or lower, to obtain an unstretched sheet. Next, roll stretching can be performed at 3.0 times or more and 8.0 times or less in the longitudinal direction (MD direction) at a temperature of 120°C or higher and 165°C or lower, followed by preheating with a tenter, and then stretching at 4.0 times or more and 20.0 times or less in the transverse direction (TD direction) at a temperature of 155°C or higher and 175°C or lower can be performed. Furthermore, after biaxial stretching, a heat setting treatment can be performed at a temperature of 165°C or higher and 175°C or lower while allowing relaxation by 1% or higher and 15% or lower.

The base film used in the present invention preferably contains particles to form protrusions on the film surface so as to impart handleability (for example, windability after lamination). Examples of the particles to be contained in the film include inorganic particles such as silica, kaolinite, talc, calcium carbonate, zeolite, and alumina, and heat-resistant polymer particles such as acryl, PMMA, nylon, polystyrene, polyester, and benzoguanamine-formalin condensate. From the viewpoint of transparency, the content of the particles in the film is preferably small, and is, for example, preferably 1 ppm or more and 1000 ppm or less. Furthermore, from the viewpoint of transparency, it is preferable to select particles having a refractive index similar to that of the resin used. In order to impart various functions to the film as needed, the film may contain an antioxidant, an ultraviolet absorber, an antistatic agent, a pigment, a lubricant, a nucleating agent, an adhesive, an antifogging agent, a flame retardant, an antiblocking agent, an inorganic or organic filler, etc.

A material other than the polypropylene resin used in the present invention may be contained in the film so as to improve the mechanical properties of the base film and improve the adhesiveness with an ink layer and an adhesive layer to be laminated on the gas barrier coating layer as long as the object of the present invention is not impaired. Examples of such a material include polypropylene resins different from those mentioned above, random copolymers that are copolymers of propylene and ethylene and/or $\alpha$-olefin having 4 or more carbon atoms, and various elastomers.

In the present invention, the thickness of the base film is arbitrarily set according to each application, and the lower limit thereof is preferably 2 $\mu$m or more, more preferably 3 $\mu$m or more, and further preferably 4 $\mu$m or more. On the other hand, the upper limit of the thickness is preferably 300 $\mu$m or less, more preferably 250 $\mu$m or less, further preferably 200 $\mu$m or less, and particularly preferably 100 $\mu$m or less. When the thickness is small, handleability tends to be poor. Meanwhile, when the thickness is large, not only there is a problem with the cost, but also flatness tends to be poor due to curling when the film is wound into a roll and stored.

The haze of the polypropylene film used as the base material of the present invention is preferably transparent from the viewpoint of visibility of the contents, and specifically the haze is preferably 6% or less, more preferably 5% or less and further preferably 4% or less. Since the haze tends to worsen, for example, when the stretching temperature and the heat setting temperature are excessively high, when the cooling roll (CR) temperature is high and the cooling rate of the stretched raw sheet is slow, and when the amount of low molecular weight material is excessively large, it is possible to control the haze to fall within the above range by adjusting these. Here, the haze was evaluated in accordance with JIS K7136 using a turbidity meter (NDH2000, manufactured by NIPPON DENSHOKU INDUSTRIES Co., Ltd.).

The base film layer in the present invention may be subjected to a corona discharge treatment, a glow discharge treatment, a flame treatment, or a surface roughening treatment or may be subjected to a known anchor coating treatment, printing, decoration, or the like, as long as the object of the present invention is not impaired. It is suitable to perform an anchor coating treatment for the purpose of stabilizing barrier properties. However, since it is common to use resins other than polyolefins such as polyurethane and polyester for an anchor coat layer, from the monomaterial viewpoint, it is preferred to perform control such that the deposition amount is smaller when performing the anchor coating treatment.

It is preferred that the deposition amount of the anchor coat layer is 0.01 to 0.50 g/m$^2$. This makes it possible to control the anchor coat layer to be uniform in coating, resulting in a film having less coating unevenness and defects. The deposition amount of the anchor coat layer is preferably 0.05 g/m$^2$ or larger and more preferably 0.10 g/m$^2$ or larger, and is preferably 0.47 g/m$^2$ or smaller and more preferably 0.45 g/m$^2$ or smaller. When the deposition amount of the anchor coat layer exceeds 0.50 g/m$^2$, gas barrier properties are improved, but the large film thickness may cause an increase in the water content in the laminated film. In addition, in terms of processability, the large film thickness may cause blocking. Furthermore, there is a concern that an adverse effect is exerted also with respect to the aspects of the recyclability and the production cost of the film.

[Inorganic thin film layer]

The gas barrier laminated film of the present invention has an inorganic thin film layer on the surface of the base film layer. The inorganic thin film layer is a thin film made of a metal or inorganic oxide. While the material that forms the inorganic thin film layer is not particularly limited as long as the material can be made into a thin film, preferred examples of the material from the viewpoint of gas barrier properties include inorganic oxides such as silicon oxide (silica), aluminum oxide (alumina), and a mixture of silicon oxide and aluminum oxide. In the composite oxide, the mixing ratio of silicon oxide and aluminum oxide is preferably such that the mass ratio of Al in the metal content ranges from 20% to 70% by mass. If the Al concentration is less than 20% by mass, the water vapor barrier properties may be lowered. On the other hand, if the Al concentration exceeds 70% by mass, the inorganic thin film layer tends to be hard, and there is a concern that the film is broken during secondary processing such as printing or lamination, resulting in deterioration in gas barrier properties. In the case where the Al concentration is 100% by mass, the water vapor barrier performance is excellent, but, due to the single material, the surface tends to be smooth, so that the slipperiness is poor and processing problems (wrinkles, acne, etc.) are more likely to occur. The silicon oxide mentioned herein refers to various silicon oxides such as $SiO$ or $SiO_2$, or a mixture of these silicon oxides. The aluminum oxide mentioned herein refers to various aluminum oxides such as $AlO$ or $Al_2O_3$, or a mixture of these aluminum oxides.

The film thickness of the inorganic thin film layer is usually 1 to 100 nm and preferably 5 to 50 nm. If the film thickness of the inorganic thin film layer is less than 1 nm, it may be difficult to obtain satisfactory gas barrier properties. On the other hand, if the inorganic thin film layer is excessively large over 100 nm, the effect of improving the gas barrier properties corresponding thereto is not obtained, and such a thickness is contrarily disadvantageous in terms of bending resistance and production cost.

A method for forming the inorganic thin film layer is not particularly limited, and, for example, known vapor deposition methods including physical vapor deposition methods (PVD methods) such as a vacuum deposition method, a sputtering method, and an ion plating method and chemical vapor deposition methods (CVD methods) may be appropriately employed. Hereinafter, a typical method for forming the inorganic thin film layer will be described with a silicon oxide/aluminum oxide-based thin film being taken as an example. For example, when a vacuum deposition method is employed, a mixture of $SiO_2$ and $Al_2O_3$, a mixture of $SiOz$ and $Al$, or the like is preferably used as a raw material to be vapor-deposited. As such a raw material to be vapor-deposited, particles are usually used, and in such a case, the size of each particle is desirably such a size that the pressure at the time of vapor deposition does not change, and a preferred particle diameter is 1 mm to 5 mm. For heating, a method such as resistance heating, high frequency induction heating, electron beam heating, or laser heating can be employed. Alternatively, oxygen, nitrogen, hydrogen, argon, carbon dioxide gas, water vapor, or the like may be introduced as a reaction gas, or reactive vapor deposition using means such as ozone addition and ion assist may be employed. Furthermore, the film formation conditions can also be changed arbitrarily, for example, by applying a bias to the object to be vapor-deposited (laminated film to be subjected to vapor deposition), or heating or cooling the object to be vapor-deposited. Such vapor deposition materials, reaction gas, bias for the object to be vapor-deposited, heating/cooling, and the like can be changed in the same manner also in the case of employing a sputtering method or a CVD method.

[Organic resin layer]

In the present invention, an organic resin layer is provided for the purpose of improving the gas barrier performance and adhesiveness of the base film. In the present invention, designing needs be made while keeping in mind that loads on the environment are generated, for example, the cost increases due to an increased number of steps by providing an organic resin layer, and recycling becomes difficult depending on the film thickness.

The deposition amount of the organic resin layer is preferably 0.10 to 0.50 $(g/m^2)$. Since the organic resin layer is thin, this can contribute to, for example, reducing foreign matter when used in recycling. The lower limit of the deposition amount of the organic resin layer is preferably 0.15 $(g/m^2)$ or larger, more preferably 0.20 $(g/m^2)$ or larger, and further preferably 0.25 $(g/m^2)$ or larger, and the upper limit of the deposition amount of the organic resin layer is preferably 0.45 $(g/m^2)$ or smaller, more preferably 0.40 $(g/m^2)$ or smaller, and further preferably 0.35 $(g/m^2)$ or smaller. If the deposition amount of the organic resin layer exceeds 0.50 $(g/m^2)$, the gas barrier properties improve, but the cohesive force inside the organic resin layer becomes insufficient, and the uniformity of the organic resin layer also decreases. Accordingly, unevenness (increased haze, whitening) or defects may occur in the coating appearance, or it may be impossible to exhibit sufficient gas barrier properties and adhesiveness. In addition, in terms of processability, a large film thickness may cause blocking. Also, there is a concern that a large film thickness may adversely affect the recyclability of the film. On the other hand, if the thickness of the organic resin layer is less than 0.10 $(g/m^2)$, there is a concern that sufficient gas barrier properties and interlayer adhesion are not obtained.

As the resin composition to be used for the organic resin layer to be formed on the surface of the laminated film of the present invention, a polymer resin composition that is generally known to have relatively high oxygen barrier properties can be used. Examples thereof include polyvinyl alcohol, ethylene vinyl alcohol copolymer, polyvinylidene chloride resin, and polyacrylonitrile. Polyvinyl alcohol-based polymers have polyvinyl alcohol units as their main constituents, and can be expected to significantly improve the barrier performance owing to high cohesiveness by hydrogen bond structures. The degree of polymerization and the degree of saponification of the polyvinyl alcohol-based polymer are determined in accordance with the objective gas barrier properties, viscosity of an aqueous coating solution, etc. Regarding the degree of polymerization, since coating becomes difficult due to high viscosity of the aqueous solution and easy gelation, 2600 or less is preferred from the viewpoint of operability of coating. Regarding the degree of saponification, with the degree of saponification of less than 90%, sufficient oxygen gas barrier properties cannot be obtained under high humidity conditions, and with the degree of saponification exceeding 99.7%, preparation of an aqueous solution is difficult, and gelation is likely to occur, so that such degrees of saponification are unsuited for industrial production. Therefore, the degree of saponification is preferably 90 to 99.7%, and more preferably 93 to 99%. In the present invention, various copolymerized or modified polyvinyl alcohol-based polymers, such as a polyvinyl alcohol-based polymer copolymerized with ethylene and a polyvinyl alcohol-based polymer modified with silanol, may also be used as long as processability and productivity are not impaired.

It is preferred that the organic resin layer of the present invention contains an inorganic layered compound. Owing to the presence of the inorganic layered compound, a labyrinth effect against gas can be expected, and gas barrier properties are improved. Examples of the material include clay minerals (including synthetic products thereof) such as smectite, kaolin, mica, hydrotalcite, and chlorite. Specific examples of the material include montmorillonite, beidellite, saponite, hectorite, sauconite, stevensite, kaolinite, nacrite, dickite, halloysite, hydrated halloysite, tetrasilylic mica, sodium taeniolite, muscovite, margarite, phlogopite, talc, antigorite, chrysotile, pyrophyllite, vermiculite, xanthophyllite, and chlorite. Furthermore, scaly silica or the like can be used as the inorganic layered compound. These materials may be used alone, or two or more of these materials may be used in combination. Among these materials, smectite (including synthetic products thereof) is particularly preferred because it has a high effect of improving water vapor barrier properties.

Further, as the inorganic layered compound, those containing therein metal ions having redox properties, particularly iron ions, are preferred. Further, among such compounds, montmorillonite, which is a kind of smectite, is preferred from the viewpoint of coating suitability and gas barrier properties. As montmorillonite, those conventionally known and used as gas barrier agents can be used.

For example, those represented by the following general formula:

$$(X, Y)_{2\text{-}3}Z_4O_{10}(OH)_2 \cdot mH_2O\text{-}(W\omega))$$

(in the formula, X represents Al, Fe (III), or Cr (III). Y represents Mg, Fe (II), Mn (II), Ni, Zn, or Li. Z represents Si or Al. W represents K, Na, or Ca. H2O represents interlayer water, m and $\omega$ represent positive real numbers.) can be used.

Among these, those in which W in the formula is Na are preferred because they are cleaved in an aqueous medium.

The size and shape of the inorganic layered compound are not particularly limited, but the particle size (major axis) is preferably 5 $\mu$m or smaller, more preferably 4 $\mu$m or smaller, and further preferably 3 $\mu$m or smaller. If the particle size is larger than 5 $\mu$m, the dispersibility is poor, and as a result, the coatability and coat appearance of the organic resin layer may deteriorate. Meanwhile, the aspect ratio thereof is 50 to 5000, more preferably 100 to 4000, and further preferably 200 to 3000.

In the present invention, it is preferred that the arithmetic mean roughness of the organic resin layer at a viewing angle of a 2 $\mu$m square using an atomic force microscope is 2.0 to 8.0 nm. As a result, it is possible to maintain the uniformity of the organic resin layer and to exhibit stable barrier performance, and it is also possible to improve adhesiveness and blocking resistance by forming surface irregularities mainly resulting from the coordination of the inorganic layered particles. The arithmetic mean roughness is preferably 2.5 nm or larger, more preferably 3.0 nm or larger, and further preferably 3.5 nm or larger, and is preferably 7.5 nm or smaller, more preferably 7.0 nm or smaller, and further preferably 6.5 nm or smaller. If the arithmetic mean roughness exceeds 8.0 nm, the surface becomes excessively rough and the uniformity of the organic resin layer decreases, resulting in occurrence of unevenness and defects in the coating appearance. This may deteriorate the printability, adhesiveness, and barrier properties. On the other hand, if the arithmetic mean roughness is smaller than 2.0 nm, the surface is excessively flat, which may deteriorate the adhesiveness or ink transferability during printing. Also, the later-described blocking resistance may deteriorate, which may lead to occurrence of blocking when the film is wound into a roll.

For setting the value of the arithmetic mean roughness within the aforementioned predetermined numerical range, it is necessary to achieve the aforementioned deposition amount by using the aforementioned materials, to make the blending ratio of the materials fall within the aforementioned appropriate range, and to combine these with the later-described liquid dilution conditions and drying/heat treatment conditions of the coating liquid.

In the present invention, a Martens hardness when the surface of the organic resin layer side surface of the laminated film is measured with a test force of 0.1 mN is preferably 248 N/mm$^2$ or less, more preferably 245 N/mm$^2$ or less, further preferably 240 N/mm$^2$ or less, particularly preferably 235 N/mm$^2$ or less, and most preferably 230 N/mm$^2$ or less. However, since there is a concern of winding onto a roll during processing, and blocking of the roll itself, etc., it is desired that the Martens hardness is not less than 160 N/mm$^2$.

If the Martens hardness exceeds 248 N/mm$^2$, the surface may be hard, the followability of the resin surface during processing may become poor, and the adhesion strength may decrease, leading to a higher possibility of occurrence of problems such as delamination of the laminated film.

In order to set the Martens hardness value within the aforementioned predetermined numerical range, it is necessary to make the deposition amount fall within the aforementioned predetermined range by using the aforementioned materials.

The organic resin layer of the present invention may contain various crosslinking agents for the purpose of improving the cohesive force and moisture-resistant thermal adhesiveness of the film as long as gas barrier properties and productivity are not impaired. Examples of the crosslinking agents include silicon-based crosslinking agents, oxazoline compounds, carbodiimide compounds, epoxy compounds, and isocyanate compounds. Among these, a silicon-based crosslinking agent is particularly preferred from the viewpoint of improving the water-resistant adhesiveness, particularly with the inorganic thin film layer by blending the silicon-based crosslinking agent. Besides the above, as the crosslinking agent, an oxazoline compound, a carbodiimide compound, an epoxy compound, etc., may be used in combination. However, when recyclability is important, it is preferred that no crosslinking agent is contained.

In the present invention, the film haze after lamination of the organic resin layer is preferably 10% or less, more preferably 8% or less, and further preferably 6% or less, from the viewpoint of visibility of the contents. If the haze is higher than 10%, in addition to significant impairment in transparency, surface irregularities may be affected, which may lead to poor appearance during the subsequent printing process and so on. The haze can be adjusted by the composition ratio of the organic resin layer, solvent conditions, film thickness, etc. Here, the haze is evaluated in accordance with JIS K7136 using a turbidity meter (NDH2000, manufactured by NIPPON DENSHOKU INDUSTRIES Co., Ltd.).

The coating method of the resin composition for an organic resin layer is not particularly limited as long as it is a method of coating the film surface to form a layer. For example, ordinary coating methods such as gravure coating, reverse roll coating, wire bar coating, and die coating can be employed.

In forming the organic resin layer, it is preferred that after application of the resin composition for an organic resin layer, pre-drying at a relatively low temperature is conducted to volatilize the solvent, and then main-drying at a high temperature is conducted to obtain a uniform film. The temperature of the pre-drying is preferably 80 to 110°C, more preferably 85 to 105°C, and further preferably 90 to 100°C. If the pre-drying temperature is lower than 80°C, the organic resin layer may be insufficiently dried. If the pre-drying temperature is higher than 110°C, drying may proceed before the organic resin layer has been wetted and spread, which may result in poor appearance.

Meanwhile, the main-drying temperature is preferably 110 to 140°C, more preferably 115 to 135°C, and further preferably 120 to 130°C. If the main-drying temperature is lower than 110°C, the film formation of the organic resin layer may fail to proceed, and the cohesive force and adhesiveness may decrease, which may result in an adverse effect on the barrier properties. If the temperature exceeds 140°C, excessive heat may be applied to the film, which may make the film brittle or increase wrinkles due to heat shrinkage.

A preferred drying time for the pre-drying is 3.0 to 10.0 seconds, more preferably 3.5 to 9.5 seconds, and further preferably 4.0 to 9.0 seconds. A preferred drying time for the main-drying is 3.0 to 10.0 seconds, more preferably 3.5 to 9.5 seconds, and further preferably 4.0 to 9.0 seconds. However, attention needs to be paid as the drying conditions vary depending on the type of heating medium and the air intake and exhaust conditions of a drying oven. Additionally, apart from the drying, an additional heat treatment for one to four days in as low temperature range as possible, specifically in a temperature range of 40 to 60°C, is also further effective for promoting formation of the organic resin layer.

[Packaging materials]

When the laminated film of the present invention is used as a packaging material, it is preferred to form a laminate provided with a heat sealable resin layer called a sealant. The heat sealable resin layer is usually provided on the organic resin layer, but may also be provided outside the base film layer (on the side opposite to the surface on which the organic resin layer is formed). The heat sealable resin layer is usually formed by an extrusion lamination method or a dry lamination method. As a thermoplastic polymer that forms the heat sealable resin layer, those capable of sufficiently exhibiting sealant adhesiveness, for example, polyethylene resins such as HDPE, LDPE, and LLDPE, polypropylene resins, ethylene-vinyl acetate copolymers, ethylene-$\alpha$-olefin random copolymers, ionomer resins, and the like, which are olefin-based polymers, can be used. Among these, LLDPE or polypropylene resin which are versatile from the viewpoint of durability, sealing strength, price, and monomaterialization is particularly preferred. The thickness of the sealant layer is preferably 20 to 100 μm, further preferably 30 to 90 μm, and more preferably 40 to 80 μm. If the thickness is less than 20 μm, there is a possibility that sufficient sealing strength is not obtained, or stiffness is lost and it becomes difficult to handle the laminate. On the other hand, if the thickness exceeds 100 μm, the laminate may have high stiffness, deteriorating the handleability as a bag, and the price may be excessively high.

[Adhesive layer]

As the adhesive layer used in the present invention, a general-purpose adhesive for lamination can be used. For example, (non) solvent-type, water-based, or hot-melt adhesives containing poly(ester)urethane-based, polyester-based, polyamide-based, epoxy-based, poly(meth)acryl-based, polyethyleneimine-based, ethylene-(meth)acrylic acid-based, polyvinyl acetate-based, (modified) polyolefin-based, polybutadiene-based, wax-based, casein-based adhesives, etc., as main ingredients can be used. Among these, urethane-based or polyester-based adhesives are preferred in consideration of heat resistance and flexibility that can follow dimensional change of each base material. As a lamination method of the adhesive layer, coating may be performed, for example, by a direct gravure coating method, a reverse gravure coating method, a kiss coating method, a die coating method, a roll coating method, a dip coating method, a knife coating method, a spray coating method, a fountain coating method, or another method, and the coating amount after drying is preferably 1 to 8 g/m2 in order to exhibit sufficient adhesiveness. The coating amount is more preferably 2 to 7 $g/m^2$ and further preferably 3 to 6 $g/m^2$. If the coating amount is less than 1 $g/m^2$, it becomes difficult to attach the adhesive layer over the entire surface, resulting in decreased adhesive strength. Moreover, if the coating amount exceeds 8 $g/m^2$, it takes time for the film to completely cure, and unreacted substances tend to remain, resulting in decreased adhesive strength. When a conventional general polypropylene film is used, an adhesive layer with a thickness of about 2 to 3 μm is required to exhibit sufficient adhesive strength. In contrast, with the article of the present invention, an equivalent or better adhesive strength can be exhibited with an adhesive layer thickness of about one-third to half of the above thickness. That is, by using the article of the present invention, the use amount of the adhesive can be reduced.

Furthermore, the laminated film of the present invention may have at least one layer of a printed layer or another plastic base material and/or paper base material between or outside the base film layer and the heat-sealable resin layer.

As a print ink for forming the print layer, an aqueous or solvent-based resin-containing print ink can be preferably used. Here, examples of the resin to be used for the print ink include acrylic-based resins, urethane-based resins, polyester-based resins, vinyl chloride-based resins, vinyl acetate copolymer resins, and mixtures of these resins. The print ink may contain known additives such as an antistatic agent, a light beam blocking agent, an ultraviolet absorber, a plasticizer, a lubricant, a filler, a colorant, a stabilizer, a lubricating agent, a defoamer, a crosslinking agent, an antiblocking agent, and an antioxidant. A printing method for providing the print layer is not particularly limited, and known printing methods such as an offset printing method, a gravure printing method, and a screen printing method can be used. For drying the solvent after printing, known drying methods such as a hot air-drying method, a heat roll drying method, and an infrared drying method can be used.

It is preferred that the laminate of the present invention has an oxygen permeability of 10 mL/m2·d·MPa or less under conditions of 23°C and 65% RH from the viewpoint of exhibiting excellent gas barrier properties. Furthermore, by controlling the aforementioned organic resin layer component, deposition amount, and so on, the oxygen permeability can be preferably 5 mL/m2·d·MPa or less and more preferably 3 mL/m2·d·MPa or less. If the oxygen permeability exceeds 10 mL/m2·d·MPa, it becomes difficult to support applications that require high gas barrier properties.

It is preferred that the laminate of the present invention has a water vapor permeability of 3 g/m2·d or less under conditions of 40°C and 90% RH from the viewpoint of exhibiting excellent gas barrier properties. Furthermore, by controlling the aforementioned organic resin layer component and deposition amount, the water vapor permeability can be preferably 2 g/m2·d or less and more preferably 1 g/m2·d or less. If the water vapor permeability exceeds 3 g/m2·d, it becomes difficult to support applications that require high gas barrier properties.

It is preferred that the laminate of the present invention has an oxygen permeability of 15 mL/m2·d·MPa or less under conditions of 23°C and 80% RH from the viewpoint of exhibiting excellent gas barrier properties. Furthermore, by controlling the aforementioned organic resin layer component and deposition amount, the oxygen permeability can be preferably 10 mL/m2·d·MPa or less and more preferably 5 mL/m2·d·MPa or less. If the oxygen permeability exceeds 15 mL/m2·d·MPa, it becomes difficult to support applications that require high gas barrier properties.

The laminate of the present invention has a lamination strength of preferably 1.0 N/15 mm or higher, more preferably 1.5 N/15 mm or higher, and further preferably 2.0 N/15 mm or higher under conditions of 23°C and 65% RH. If the lamination strength is less than 1.0 N/15 mm, peeling may occur due to bending load or heat during sealing, which may cause deterioration in barrier properties and leakage of contents. This may also cause impairment in tearing-by-hand property.

EXAMPLES

Next, the present invention will be described in more detail by means of examples. However, the present invention is not limited to the following examples. The film was evaluated by the following measurement methods.

(1) Thickness of laminated film

Measurement was performed using a dial gauge in accordance with the method A in JIS K 7130-1999.

(2) Haze of laminated film

Measurement was performed using a haze meter NDH-2000 (manufactured by NIPPON DENSHOKU INDUSTRIES Co., Ltd.) in accordance with JIS K7136.

(3) Deposition amount of organic resin layer

In each of Examples and Comparative Examples, using each laminated film obtained at the stage of laminating an organic resin layer on a base film as a sample, a 100 mm × 100 mm test piece was cut out from the sample, and the organic resin layer was wiped with ethanol, and a deposition amount was calculated from the change in mass of the film before and after wiping.

(1) Method of measuring Martens hardness (N/mm2)

The obtained laminated film was cut into an approximately 2 cm square, and the surface opposite to the organic resin layer-side surface which was a measurement surface was fixed on a glass plate with a thickness of approximately 1 mm using an adhesive, and then the humidity was adjusted by leaving the sample in an atmosphere of 23°C and 50% RH for 12 hours. This sample was measured under the following measurement conditions using a dynamic ultra-micro hardness tester ("DUH-211", available from SHIMADZU CORPORATION) by a method conforming to ISO14577-1 (2002). The measurement was performed 10 times while the position of the film was changed, and the average of the values at eight points excluding the maximum and the minimum was determined.

<Measurement conditions>

(Settings)

· Measurement environment: temperature 23°C, relative humidity 50%
· Test mode: load-unload test
· Indenter: ridge angle 115 degrees, triangular pyramid indenter
· Indenter elastic modulus: $1.140 \times 10^6$ N/mm$^2$
· Indenter Poisson's ratio: 0.07
· Cf-Ap, As correction: Yes
· Test force: 0.10 mN
· Load speed: 0.0050 mN/sec
· Load holding time: 5 sec
· Unload holding time: 0 sec

A Martens hardness was determined according to the following formula (1) from the inclination (m) of the test force-pushing depth curve between the test forces 50%F and 90%F (F = 0.10 mN) where the depth was proportional to the square root of the test force.

$$\text{Martens hardness HMs} = 1/(26.43 \times m^2) \qquad (1)$$

(6) Method for measuring arithmetic mean roughness of organic resin layer

A surface roughness of a laminated film was measured using a scanning probe microscope (SPM) ("SPM9700", manufactured by SHIMADZU CORPORATION) (cantilever: OMCL-AC200TS provided by Olympus Corporation was used, observation mode: phase mode). Specifically, an SPM image was obtained at a viewing angle of a 2 μm square on the film surface. The obtained image was subjected to tilt compensation in the X, Y, and Z directions using tilt compensation which is a function of software attached to the SPM, and then a value of arithmetic mean roughness was calculated. The arithmetic mean roughness was calculated by extracting only a reference length in the direction of the average line from a roughness curve obtained by removing surface waviness components longer than a predetermined wavelength from a cross-sectional curve using a high-pass filter, and two-dimensionally expanding a value obtained by the following formula when a roughness curve is represented by y = f(X) taking an X axis in the direction of the average line of the extracted part, and a Y axis in the direction of vertical magnification.

$$Ra = 1/L\int L0 \ |f(X)| dx$$

L: Reference length

(7) Method for evaluating oxygen permeability

In each of Examples and Comparative Examples, using each laminated film obtained at the stage of laminating an organic resin layer on a base film as a sample, an oxygen permeability was measured using an oxygen permeability measuring device ("OX-TRAN (registered trademark) 1/50", manufactured by AMETEK MOCON) in accordance with the method B in JIS-K7126, under two atmosphere conditions: a temperature of 23°C and a humidity of 65% RH; and a temperature of 23°C and a humidity of 80% RH. An oxygen permeability was measured in the direction in which oxygen permeates from the base film side to the organic resin layer side.

(8) Method for evaluating water vapor permeability

In each of Examples and Comparative Examples, using each laminated film obtained at the stage of laminating an organic resin layer on a base film as a sample, a water vapor permeability was measured using a water vapor permeability measuring device ("PERMATRAN-W3/33MG", manufactured by AMETEK MOCON) in accordance with B method in JIS-K7129 in an atmosphere of a temperature of 40°C and a humidity of 90% RH. A water vapor permeability was measured in the direction in which water vapor permeates from the base film side to the organic resin layer side.

(9) Evaluation of blocking resistance of laminated film

In each of Examples and Comparative Examples, using each laminated film obtained at the stage of laminating an organic resin layer on a base film as a sample, two sets of samples obtained by cutting such into strips with a width of 15 mm and a length of 200 mm were prepared. Then, after adding one drop of water (approximately 0.02 g) to the organic resin layer surface of one sample, the other sample was overlaid such that the organic resin layer surfaces were in contact with each other, and the samples were sandwiched between glass plates, and dried for 24 hours by keeping at 40°C to evaporate the water. Then, the two strips were peeled off, and the state of adhesion of the films was examined. The case where the films were adhered to such an extent that the films were broken when peeled off was determined as "poor", and the case where the films were peeled off smoothly without breaking the films was determined as "good".

(10) Evaluation of solvent volatility of organic resin layer

In each of Examples and Comparative Examples, each laminated film obtained at the stage of laminating an organic resin layer on a base film was used as a sample. The organic resin layer was lightly pressed with a paper towel, and the sample in which the organic resin layer was adhered to the paper towel was regarded as being insufficient in solvent volatilization and was determined as "poor", whereas the sample in which the organic resin layer was not adhered to the paper towel was regarded as being sufficient in solvent volatilization and was determined as "good".

(11) Evaluation of appearance of organic resin layer

In each of Examples and Comparative Examples, each laminated film obtained at the stage of laminating an organic resin layer on a base film was used as a sample, and the sample in which voids, streaks, unevenness, and so on were recognizable in the organic resin layer by visual examination was determined as "poor" in appearance, and the sample in which voids, streaks, unevenness, and so on were not recognizable was determined as "good" in appearance.

[Preparation of laminate]

After applying an ester-based adhesive (TM569/CAT10L, manufactured by Toyo-Morton, Ltd.) on laminates obtained in Examples and Comparative Examples, an unstretched polypropylene film (P1128, manufactured by Toyobo Co., Ltd.; thickness 30 μm; CPP) was dry laminated on a metal roll heated to 60°C and aged at 40°C for four days to obtain laminated gas barrier laminates for evaluation.

The laminate obtained by applying the adhesive so that the thickness after drying was 3 μm was named laminate A, the laminate obtained by applying the adhesive so that the thickness after drying was 1.5 μm was named laminate B, and the laminate obtained by applying the adhesive so that the thickness after drying was 0.8 μm was named laminate C.

(12) Method for evaluating lamination strength

The laminates A to C prepared above were cut into test pieces with a width of 15 mm and a length of 200 mm, and were measured for lamination strength (normal state) using a Tensilon universal material testing machine ("UMT-II-500 model", manufactured by Toyo Baldwin Co., Ltd.) under conditions of a temperature of 23°C and a relative humidity of 65%. For the measurement of lamination strength, a tensile speed was set at 200 mm/min, and the strength when the laminated film layer and the heat-sealable resin layer of each laminated film obtained in Examples and Comparative Examples were delaminated at a peeling angle of 90 degrees was measured.

[Inorganic thin film layer]

A method for preparing an inorganic thin film layer to be used in each of Examples and Comparative Examples is described below. An inorganic thin film layer was used in Examples 1 to 7 and Comparative Examples 1 to 4 and 8 and shown in Table 2. An inorganic thin film layer was not laminated in Comparative Examples 5 to 7.

(Formation of inorganic thin film layer M-1)

As an inorganic thin film layer M-1, aluminum oxide was vapor deposited on the base film layer. The method for vapor depositing aluminum oxide onto the base film layer includes setting the film on the unwinding side of continuous vacuum vapor deposition equipment, running the film via a cooling metal drum, and winding up the film. At this time, the continuous vacuum vapor deposition equipment was depressurized to $10^{-4}$ Torr or lower, metal aluminum with a purity of 99.99% was loaded into an alumina crucible from the bottom of the cooling drum, and the metal aluminum was evaporated by heating, and adhered and deposited on the film while oxygen was supplied into the vapor to cause oxidation reaction, to form an aluminum oxide film having a thickness of 10 nm.

(Formation of inorganic thin film layer M-2)

As an inorganic thin film layer M-2, a composite oxide layer of silicon dioxide and aluminum oxide was formed on the base film layer by electron beam vapor deposition. Particulate $SiO_z$ (purity of 99.9%) and $Al_2O_3$ (purity of 99.9%) of about 3 mm to 5 mm were used as vapor deposition sources. The film thickness of the inorganic thin film layer ($SiO_2/Al_2O_3$ composite oxide layer) in the film thus obtained (film containing inorganic thin film layer/organic resin layer) was 13 nm. The composition of the composite oxide layer was $SiO_2/Al_2O_3$ (mass ratio) = 60/40.

The details of a coating liquid used in Examples and Comparative Examples are described below. A coating liquid was used in Examples 1 to 6 and Comparative Examples 1 to 8 and shown in Table 2.

[Polyvinyl alcohol resin solution (A)]

To 90 parts by mass of purified water, 10 parts by mass of a fully saponified polyvinyl alcohol resin (product name: G Polymer OKS8049Q (degree of saponification: 99.0% or higher, average degree of polymerization: 450) manufactured by The Nippon Synthetic Chemical Industry Co.,Ltd.) was added, and the mixture was heated to 80°C under stirring and then stirred for about 1 hour. Thereafter, the mixture was cooled to room temperature, thereby obtaining an almost transparent polyvinyl alcohol solution (PVA solution) having a solid content of 10%.

[Inorganic layered compound dispersion (B)]

To 95 parts by mass of purified water, 5 parts by mass of montmorillonite (product name: KUNIPIA F, manufactured by KUNIMINE INDUSTRIES CO., LTD.), which is an inorganic layered compound, was added under stirring, and sufficiently dispersed using a homogenizer at a setting of 1500 rpm. Thereafter, the temperature was kept at 23°C for a day to obtain an inorganic layered compound dispersion having a solid content of 5%.

[EVOH resin solution (C)]

To a mixture of 40 parts by mass of purified water and 50 parts by mass of isopropyl alcohol, 10 parts by mass of an ethylene-vinyl alcohol copolymer (EVOH) resin (product name: L171B (ethylene content: 27 mol%) manufactured by Kuraray Co., Ltd.) was added, and heated to 80°C under stirring, and then stirred for about 1 hour. Thereafter, the mixture was cooled to room temperature, thereby obtaining an EVOH solution having a solid content of 10%.

[Coating Liquid 1 to be used for organic resin layer of Example 1]

Materials were mixed at the following blending ratio to prepare a coating liquid (resin composition for an organic resin layer).

| | |
|---|---|
| Ion exchange water | 20.00% by mass |
| Isopropyl alcohol | 15.00% by mass |
| Polyvinyl alcohol resin solution (A) | 35.00% by mass |
| Inorganic layered compound dispersion (B) | 30.00% by mass |

[Coating Liquid 2 to be used for organic resin layer of Examples 2, 3, 6, 7 and Comparative Examples 3-5, 8]

Materials were mixed at the following blending ratio to prepare a coating liquid (resin composition for an organic resin layer).

| | |
|---|---|
| Ion exchange water | 15.00% by mass |
| Isopropyl alcohol | 15.00% by mass |
| Polyvinyl alcohol resin solution (A) | 30.00% by mass |
| Inorganic layered compound dispersion (B) | 40.00% by mass |

[Coating Liquid 3 to be used for organic resin layer of Example 4]

Materials were mixed at the following blending ratio to prepare a coating liquid (resin composition for an organic resin layer).

| | |
|---|---|
| Ion exchange water | 10.00% by mass |
| Isopropyl alcohol | 15.00% by mass |
| Polyvinyl alcohol resin solution (A) | 25.00% by mass |
| Inorganic layered compound dispersion (B) | 50.00% by mass |

[Coating Liquid 4 to be used for organic resin layer of Example 5 and Comparative Example 7]

Materials were mixed at the following blending ratio to prepare a coating liquid (resin composition for an organic resin layer).

| | |
|---|---|
| Ion exchange water | 27.50% by mass |
| Isopropyl alcohol | 15.00% by mass |
| EVOH resin solution (C) | 42.50% by mass |
| Inorganic layered compound dispersion (B) | 15.00% by mass |

[Coating Liquid 5 to be used for organic resin layer of Comparative Example 1]

Materials were mixed at the following blending ratio to prepare a coating liquid (resin composition for an organic resin layer).

| | |
|---|---|
| Ion exchange water | 35.00% by mass |
| Isopropyl alcohol | 15.00% by mass |
| Polyvinyl alcohol resin solution (A) | 50.00% by mass |

[Coating Liquid 6 to be used for organic resin layer of Comparative Example 2]

| | |
|---|---|
| Ion exchange water | 30.00% by mass |
| Isopropyl alcohol | 15.00% by mass |
| Polyvinyl alcohol resin solution (A) | 45.00% by mass |
| Inorganic layered compound dispersion (B) | 10.00% by mass |

[Coating Liquid 7 to be used for organic resin layer of Comparative Example 6]

| | |
|---|---|
| Ion exchange water | 35.00% by mass |
| Isopropyl alcohol | 15.00% by mass |
| EVOH resin solution (C) | 50.00% by mass |

(Coating with coating liquid onto film (lamination of organic resin layer))

The coating liquid prepared above was applied by a gravure roll coating method on the surface on which the inorganic thin film layer was laminated, or on the corona-treated surface of the base film if no inorganic thin film layer was laminated. After pre-drying at 90°C for 4 seconds, main-drying at 130°C for 4 seconds was performed to obtain an organic resin layer. The deposition amount of an organic resin layer E after drying was as shown in Table 2. Thereafter, a post-heat treatment was performed at 40°C for two days. The coating liquid forming the organic resin layer, the temperature of the aforementioned main-drying, and the post-heat treatment conditions were changed as shown in Table 2 in each of Examples and Comparative Examples.

In the manner as described above, a laminated film having an organic resin layer on a base film was produced.

Regarding a base material, in Examples 1 to 6 and Comparative Examples 1 to 7, a polypropylene homopolymer PP-1 shown in Table 1 was used for a base layer (A). For a surface layer (B), one containing 43.2% by weight of the polypropylene homopolymer PP-2 shown in Table 1, 52.0% by weight of an ethylene copolymerized polypropylene polymer PP-4 shown in Table 1, and 4.8% by weight of an antiblocking agent-containing masterbatch FTX0627G was used. At this time, the melt flow rate (g/10 minutes) of the polypropylene-based resin composition forming the surface layer (B) was 5.1.

For the surface layer (C), one containing 93.6% by weight of the polypropylene homopolymer PP-1 shown in Table 1 and 6.4% by weight of the antiblocking agent-containing masterbatch FTX0627G was used.

Using a 45 mm extruder for the base layer (A), a 25 mm extruder for the surface layer (B), and a 20 mm extruder for the surface layer (C), respective raw resins were melted at 250°C, co-extruded into a sheet from a T-die, solidified by cooling such that the surface layer (B) came into contact with a cooling roll at 30°C, and then stretched 4.5 times in the longitudinal direction (MD) at 135°C. Next, in a tenter, both ends of the film in the transverse direction (TD) were held with clips, and after preheating at 173°C, the film was stretched 8.2 times in the transverse direction (TD) at 164°C, and heat setting was performed at 171°C while the film was being relaxed by 6.7% in the transverse direction (TD).

In this way, a biaxially oriented polypropylene film having a structure of surface layer (B)/base layer (A)/surface layer (C) was obtained.

The surface of the surface layer (B) of the biaxially oriented polypropylene film was subjected to a corona treatment using a corona treatment machine manufactured by Softal Corona & Plasma GmbH under a condition of applied current value: 0.75A, and then the film was wound up with a winder. The thickness of the obtained film was 20 $\mu$m (thicknesses of surface layer (B)/base layer (A)/surface layer (C) were 1.3 $\mu$m/17.7 $\mu$m/1.0 $\mu$m). Also, a biaxially oriented polypropylene film whose surface layer (B) has a Martens hardness of 248 N/mm$^2$ or less was used. The obtained laminated film was evaluated. The results are shown in Table 2.

In Example 7, an anchor coat layer was applied on the surface layer (B) of the base material of Example 1 using Coating Liquid 1 shown below by a gravure roll coating method, and then dried at 130°C for 10 seconds, and the resultant sample was used. The deposition amount of the anchor coat layer at this time was 0.40 g/m$^2$.

[Coating Liquid 1]

To a solution of 0.25 parts by mass of a silane coupling agent, N-2-(aminoethyl)-3-aminopropyltrimethoxysilane ("KBM-603", manufactured by Shin-Etsu Chemical Co., Ltd.) dissolved in 1.48 parts by mass of acetone, 4.07 parts by mass of isocyanate, trimethylolpropane adduct of meta-xylene diisocyanate ("TAKENATE D-110N", manufactured by Mitsui Chemicals, Inc.: solid content 75%) was mixed, and the mixture was stirred for 10 minutes using a magnetic stirrer. The obtained preparation was diluted with 69.55 parts by mass of methyl ethyl ketone and 14.03 parts by mass of 1-methoxy-2-propanol (hereinafter referred to as PGM), and then 10.62 parts by mass of a polyester resin (DF-COAT GEC-004C, manufactured by DIC Corporation: solid content 30%) was added to obtain the objective Coating Liquid 1.

In Comparative Example 8, Pyrene Film P2102 manufactured by Toyobo Co., Ltd. having a thickness of 20 μm was used.

[Table 1]

| Polypropylene-based resin | PP-1 | PP-2 | PP-3 | PP-4 |
|---|---|---|---|---|
| Monomer material | propylene | propylene | propylene | propylene, ethylene |
| Stereoregularity of resin (mesopentad fraction (%)) | 98.7 | 98.4 | 98.9 | not measurable |
| Amount of copolymerized ethylene (% by mole) | 0.0 | 0.0 | 0.0 | 3.0 |
| MFR (g/10 min, 230°C, 2.16kgf) | 7.6 | 3.0 | 1.9 | 7.0 |
| Molecular weight (Mn) | 67,500 | 79,400 | 80,000 | 80,000 |
| Molecular weight (Mw) | 270,000 | 312,000 | 360,000 | 220,000 |
| Molecular weight distribution (Mw/Mn) | 4.0 | 3.9 | 4.5 | 2.7 |
| DSC melting peak temperature (°C) | 168.0 | 163.9 | 163.3 | 125.3 |
| DSC melting peak area(J/g) | 105.2 | 98.6 | 94.3 | 64.3 |

[Table 2A]

| | Base material | | Producing method of inorganic thin film layer D | Composition of organic resin layer E | Coating layer (name, ratio of mass %) | | | Drying condition | | | | Solvent volatility of coating layer | Appearance of coating layer |
| | Material | Mass ratio (%) | | | Organic resin | Inorganic layered compound | Deposition amount [g/m$^2$] | Pre-drying | | Main-drying | | | |
| | | | | | | | | Temperature (°C) | Time (second) | Temperature (°C) | Time (second) | | |
| Example 1 | easily adhesive OPP | 100 | M-2 | PVA+MMT | 70 | 30 | 0.40 | 90 | 4 | 130 | 4 | good | good |
| Example 2 | easily adhesive OPP | 100 | M-2 | PVA+MMT | 60 | 40 | 0.40 | 90 | 4 | 130 | 4 | good | good |
| Example 3 | easily adhesive OPP | 100 | M-2 | PVA+MMT | 60 | 40 | 0.20 | 90 | 4 | 130 | 4 | good | good |
| Example 4 | easily adhesive OPP | 100 | M-2 | PVA+MMT | 50 | 50 | 0.40 | 90 | 4 | 130 | 4 | good | good |
| Example 5 | easily adhesive OPP | 100 | M-2 | EVOH + MMT | 85 | 15 | 0.40 | 90 | 4 | 130 | 4 | good | good |
| Example 6 | easily adhesive OPP | 100 | M-1 | PVA+MMT | 60 | 40 | 0.40 | 90 | 4 | 130 | 4 | good | good |
| Example 7 | easily adhesive OPP | 100 | M-2 | PVA+MMT | 60 | 40 | 0.40 | 90 | 4 | 130 | 4 | good | good |
| Comparative Example 1 | easily adhesive OPP | 100 | M-2 | PVA | 100 | 0 | 0.40 | 90 | 4 | 130 | 4 | good | good |
| Comparative Example 2 | easily adhesive OPP | 100 | M-2 | PVA+MMT | 90 | 10 | 0.40 | 90 | 4 | 130 | 4 | good | good |

(continued)

| | Base material | | Producing method of inorganic thin film layer D | Composition of organic resin layer E | Coating layer (name, ratio of mass %) | | | Drying condition | | | | Solvent volatility of coating layer | Appearance of coating layer |
| | Material | Mass ratio (%) | | | Organic resin | Inorganic layered compound | Deposition amount [g/m²] | Pre-drying | | Main-drying | | | |
| | | | | | | | | Temperature (°C) | Time (second) | Temperature (°C) | Time (second) | | |
| Comparative Example 3 | easily adhesive OPP | 100 | M-2 | PVA+MMT | 60 | 40 | 0.08 | 90 | 4 | 130 | 4 | good | good |
| Comparative Example 4 | easily adhesive OPP | 100 | M-2 | PVA+MMT | 60 | 40 | 1.5 | 90 | 4 | 130 | 4 | good | good |
| Comparative Example 5 | easily adhesive OPP | 100 | not exist | PVA+MMT | 60 | 40 | 0.40 | 90 | 4 | 130 | 4 | good | good |
| Comparative Example 6 | easily adhesive OPP | 100 | not exist | EVOH | 100 | 0 | 0.40 | 90 | 4 | 130 | 4 | good | good |
| Comparative Example 7 | easily adhesive OPP | 100 | not exist | EVOH+MMT | 85 | 15 | 0.40 | 90 | 4 | 130 | 4 | good | good |
| Comparative Example 8 | general OPP | 100 | M-2 | PVA+MMT | 60 | 40 | 0.40 | 90 | 4 | 130 | 4 | good | good |

[Table 2B]

| | Laminate | | | | | | | | | | | Monomaterialization |
| | Oxygen permeability | | | Water vapor permeability | Haze | Surface roughness | Blocking resistance | Martens hardness HMs | Lamination strength | | | |
| | (A) measured at 23°C, 65% | (B) measured at 23°C, 80% | Rate of deterioration under high humidity conditions (B/A)×100 | [g/m² ∎ d] | | | | | [N/15mm] | | | |
| | [ml/m² ∎ day ∎ MPa] | | [%] | | [-] | [nm] | | N/mm2 | A [thickness of adhesive: 3pm] | B [thickness of adhesive: 1.5μm] | C [thickness of adhesive: 0.8μm] | |
| Example 1 | 1.0 | 4.5 | 450 | 0.9 | 6 | 3.7 | good | 238 | 4.8 | 3.3 | 2.8 | good |
| Example 2 | 0.8 | 4.1 | 513 | 0.8 | 5 | 3.5 | good | 235 | 4.5 | 3.5 | 2.8 | good |
| Example 3 | 0.9 | 3.9 | 433 | 0.9 | 5 | 3.5 | good | 240 | 4.4 | 3.2 | 2.9 | good |
| Example 4 | 0.8 | 4.2 | 525 | 0.8 | 5 | 4.0 | good | 237 | 4.3 | 3.3 | 2.5 | good |
| Example 5 | 5.0 | 11.1 | 222 | 1.0 | 5 | 2.3 | good | 245 | 4.2 | 3.1 | 2.4 | good |
| Example 6 | 0.7 | 3.8 | 543 | 0.8 | 5 | 3.3 | good | 237 | 4.4 | 3.0 | 2.5 | good |
| Example 7 | 0.6 | 2.8 | 467 | 0.5 | 5 | 3.3 | good | 237 | 4.4 | 3.0 | 2.4 | good |
| Comparative Example 1 | 16.9 | 39.8 | 236 | 2.1 | 4 | 0.5 | poor | 244 | 4.3 | 3.5 | 3.0 | good |
| Comparative Example 2 | 13.3 | 31.1 | 234 | 1.8 | 5 | 1.8 | poor | 245 | 4.3 | 3.1 | 2.7 | good |
| Comparative Example 3 | 83.0 | 151.0 | 182 | 2.3 | 4 | 3.3 | good | 246 | 4.2 | 3.0 | 2.4 | good |
| Comparative Example 4 | 0.8 | 3.9 | 488 | 0.7 | 9 | 4.0 | good | 239 | 4.3 | 3.3 | 2.5 | fair |
| Comparative Example 5 | 35.0 | 325.6 | 930 | 3.0 | 6 | 3.6 | good | 236 | 4.6 | 3.2 | 2.6 | good |

| | Laminate | | | | | | | | | | | Monomaterialization |
| | Oxygen permeability | | | Water vapor permeability | Haze | Surface roughness | Blocking resistance | Martens hardness HMs | Lamination strength | | | |
| | (A) meas-ured at 23°C, 65% | (B) measured at 23°C, 80% | Rate of deterioration under high humidity conditions (B/A)×100 | [g/m² ▪ d] | | | | | [N/15mm] | | | |
| | [ml/m² ▪ day ▪ MPa] | [%] | | | [-] | [nm] | | N/mm2 | A [thick-ness of ad-hesive: 3pm] | B [thick-ness of ad-hesive: 1.5μm] | C [thick-ness of ad-hesive: 0.8μm] | |
| Comparative Example 6 | 76.0 | 155.3 | 204 | 3.3 | 5 | 0.6 | good | 240 | 4.0 | 3.6 | 2.2 | good |
| Comparative Example 7 | 65.0 | 144.1 | 222 | 3.2 | 5 | 2.3 | good | 242 | 3.5 | 2.9 | 1.8 | good |
| Comparative Example 8 | 0.9 | 4.4 | 489 | 0.9 | 5 | 3.4 | good | 310 | 1.6 | 1.1 | 0.5 | good |

EP 4 410 547 A1

INDUSTRIAL APPLICABILITY

According to the present invention, it becomes possible to provide a laminated film that is a film based on a polypropylene film, and that is capable of forming a laminate structure configured by almost a single kind of resin that imposes little load on the environment, the laminated film having performances necessary for packaging materials such as gas barrier properties and adhesiveness. In addition, since the laminated film of the present invention can be easily produced due to a smaller number of processing steps and excellent processability, it is possible to provide a gas barrier film with uniform properties that are excellent both in economic efficiency and production stability.

**Claims**

1. A laminated film having a base layer (A) mainly composed of a polypropylene-based resin, a surface layer (B) on one surface of the base layer (A), and a surface layer (C) on the other surface of the base layer (A), the laminated film having an inorganic thin film layer (D) further laminated on the surface layer (B), and an organic resin layer (E) further laminated on the inorganic thin film layer (D), the laminated film satisfying the following requirements:

   (a) a deposition amount of the organic resin layer (E) is 0.10 $g/m^2$ or larger and 0.50 $g/m^2$ or smaller;
   (b) a Martens hardness when a surface on the organic resin layer side of the laminated film is measured with a test force of 0.1 mN is 248 $N/mm^2$ or less;
   (c) a haze of the laminated film is 6% or less; and
   (d) an oxygen permeability of the laminated film in an environment of 23°C and 65% RH is 10 mL/ $m^2 \cdot d \cdot MPa$ or less.

2. The laminated film according to claim 1, wherein a water vapor permeability in an environment of 40°C and 90% RH is 1 $g/m^2 \cdot d$ or less.

3. The laminated film according to claim 1 or 2, wherein an oxygen permeability of the laminated film in an environment of 23°C and 80% RH is 15 mL/ $m^2 \cdot d \cdot MPa$ or less.

4. The laminated film according to any one of claims 1 to 3, wherein an arithmetic mean roughness in a 2 $\mu$m square of the organic resin layer on the laminated film is within a range of 2.0 to 8.0 nm.

5. The laminated film according to any one of claims 1 to 4, wherein the laminated film has a thickness of 9 $\mu$m to 200 $\mu$m.

6. A packaging material comprising an olefin-based sealant layer and the laminated film according to any one of claims 1 to 5, wherein the olefin-based sealant layer is laminated on one side of the laminated film.

## INTERNATIONAL SEARCH REPORT

International application No.

**PCT/JP2022/035139**

| A. | CLASSIFICATION OF SUBJECT MATTER |
|---|---|

*B32B 27/32*(2006.01)i; *B32B 9/00*(2006.01)i; *B65D 65/40*(2006.01)i
FI:   B32B27/32 102; B65D65/40 D; B32B9/00 A

According to International Patent Classification (IPC) or to both national classification and IPC

| B. | FIELDS SEARCHED |
|---|---|

Minimum documentation searched (classification system followed by classification symbols)

B32B1/00-43/00; B65D65/00-65/46

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2000-254994 A (TOPPAN PRINTING CO LTD) 19 September 2000 (2000-09-19)<br>claims 1, 12-13, paragraphs [0064]-[0079], table 1, example 4 | 1-6 |
| A | WO 2016/158794 A1 (TOPPAN PRINTING CO LTD) 06 October 2016 (2016-10-06)<br>claims 14-21, paragraphs [0040], [0043], [0052], [0065], [0119]-[0120], [0135]-[0176], examples | 1-6 |
| A | WO 2018/159248 A1 (TOYOBO CO., LTD.) 07 September 2018 (2018-09-07)<br>claim 1, paragraphs [0055], [0084]-[0105], examples | 1-6 |
| A | JP 11-151786 A (TORAY IND INC) 08 June 1999 (1999-06-08)<br>claims 1-6, paragraphs [0001], [0058]-[0062], table 1, example 4 | 1-6 |
| A | WO 2021/020298 A1 (TOPPAN PRINTING CO LTD) 04 February 2021 (2021-02-04)<br>claim 1, examples | 1-6 |
| A | JP 2005-225077 A (TOYO BOSEKI) 25 August 2005 (2005-08-25)<br>claims 1-2, paragraph [0061], examples | 1-6 |

☑ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 November 2022** | **22 November 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT

| | International application No. |
|---|---|
| | **PCT/JP2022/035139** |

**C.    DOCUMENTS CONSIDERED TO BE RELEVANT**

| Category* | Citation of document, with indication, where appropriate, of the relevant passages | Relevant to claim No. |
|---|---|---|
| P, A | WO 2022/085586 A1 (TOPPAN PRINTING CO LTD) 28 April 2022 (2022-04-28) claims 1, 4, paragraph [0043] | 1-6 |
| P, A | WO 2022/019192 A1 (TOYOBO CO., LTD.) 27 January 2022 (2022-01-27) claim 1, paragraphs [0065]-[0066] | 1-6 |

Form PCT/ISA/210 (second sheet) (January 2015)

## INTERNATIONAL SEARCH REPORT
### Information on patent family members

International application No.

**PCT/JP2022/035139**

| Patent document cited in search report | | | Publication date (day/month/year) | Patent family member(s) | Publication date (day/month/year) |
|---|---|---|---|---|---|
| JP | 2000-254994 | A | 19 September 2000 | (Family: none) | |
| WO | 2016/158794 | A1 | 06 October 2016 | US 2018/0009206 A1 claims 14-21, paragraphs [0048], [0053], [0062], [0075], [0128]-[0129], [0145]-[0181], examples | |
| WO | 2018/159248 | A1 | 07 September 2018 | US 2019/0389191 A1 claim 1, paragraphs [0072], [0101]-[0136], examples | |
| JP | 11-151786 | A | 08 June 1999 | (Family: none) | |
| WO | 2021/020298 | A1 | 04 February 2021 | US 2022/0267067 A1 claim 1, examples | |
| JP | 2005-225077 | A | 25 August 2005 | (Family: none) | |
| WO | 2022/085586 | A1 | 28 April 2022 | (Family: none) | |
| WO | 2022/019192 | A1 | 27 January 2022 | (Family: none) | |

Form PCT/ISA/210 (patent family annex) (January 2015)

**EP 4 410 547 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000052501 A
- JP H4359033 A
- JP 2003231221 A
- JP H4345841 A
- JP 2006095782 A
- JP 9111017 A
- JP 2005035167 A